# EUROPEAN PATENT SPECIFICATION

(11) **EP 1 902 062 B1**
(45) Date of publication and mention of the grant of the patent: **13.06.2012**
(21) Application number: 06777472.9
(22) Date of filing: 27.06.2006
(51) Int. Cl.: C07F 17/00

(54) **METALLOCENE COMPOUNDS**
METALLOCEN-VERBINDUNGEN
COMPOSES METALLOCENIQUES

(30) Priority: 30.06.2005 EP 05105952; 08.07.2005 US 697939 P
(43) Date of publication of application: 26.03.2008
(73) Proprietor: Basell Polyolefine GmbH, 50389 Wesseling (DE)
(72) Inventor: ELDER, Michael J., W.R. Grace & Co., Columbia, MD 21044 (US); JONES, Robert L., 65926 Frankfurt (DE); RESCONI, Luigi, I-44100 Ferrara (IT)
(74) Representative: Sacco, Marco
(86) International application number: PCT/EP2006/063577
(87) International publication number: WO 2007/003528

(56) References cited:
- WO-A-03/042258
- WO-A1-01/48040

## Description

The present invention relates to a class of metallocene compounds that can be used as catalyst-component for the polymerization of alpha olefins in particular for the (co)polymerization of 1-butene.

1-Butene polymers are well known in the art. In view of their good properties in terms of pressure resistance, creep resistance, and impact strength, they are widely used for example in the manufacture of pipes for metal pipe replacement, easy-open packaging and films.

The 1 butene (co)polymers are generally prepared by polymerizing 1-butene in the presence of TiCl₃ based catalyst components together with diethylaluminum chloride (DEAC) as cocatalyst. In some cases mixtures of diethyl aluminum iodide (DEAI) and DEAC are used. The polymers obtained, however, generally do not show satisfactory mechanical properties. Furthermore, in view of the low yields obtainable with the TiCl₃ based catalysts, the 1-butene polymers prepared with these catalysts have a high content of catalyst residues (generally more than 300 ppm ofTi) which lowers the properties of the polymers and makes necessary to carry out a subsequent deashing step.

1-Butene (co)polymers can also be obtained by polymerizing the monomers in the presence of a stereospecific catalyst comprising: (A) a solid component comprising a Ti compound and an electron-donor compound supported on MgCl₂; (B) an alkylaluminum compound and, optionally, (C) an external electron-donor compound. A process of this type is disclosed in EP-A-172961 and WO99/45043.

Recently metallocene compounds have been used for producing 1-butene polymers. In Macromolecules 1995, 28, 1739-1749, rac-dimethylsilylbis(4,5,6,7-tetrahydro-1-indenyl)zirconium dichloride and methylaluminoxane have been used for polymerizing 1-butene. The yield of the process is not indicated and the molecular weight of the obtained polymer (Mn) is very low. Tn Macromol. Rapid Commun. 18, 581-589 (1997), rac- and meso-[dimethylsilylenebis(2,3,5-trimethyl-cyclopentadienyl)]zirconium dichloride have been used for the polymerization of 1-butene. The yields of the process and the molecular weight of the obtained polymers are rather low.

WO 01/48040 relates to a class of metallocene compounds wherein the fluorenyl moiety is bridged to a cyclopentadithiophenyl moiety.

Better results in terms of yield of the process, isotacticity and molecular weight of the obtained polymer have been obtained by using the metallocene compound described in

WO03/042258. However this document describes in generic way the class of metallocene compounds of the present invention. WO01/44318 relates to a class of metallocene compounds wherein at least one cyclopentadienyl moiety contains an heterocyclic ring. This document describes only in a generic way the class of metallocene compounds of the present invention.

Therefore there is the need of a new class of metallocene compounds easy to synthesize and able to give, when used as catalyst component, polymers having a high molecular weight in high yields. The class of metallocene compounds of the present invention have the further advantage that they are not synthesized as racemic/meso mixtures since the meso form does not exist because of their symmetry (C₁) (classes of symmetry for the metallocene compounds are described in Chem. Rev. 2000, 100, 1253-1345). As a consequence they are synthesized in higher yields with respect to metallocene compounds having C₂ symmetry, since for the latter it is necessary to separate the racemic and meso form.

The first object of the present invention (not claimed) is a metallocene compound of formula (I) 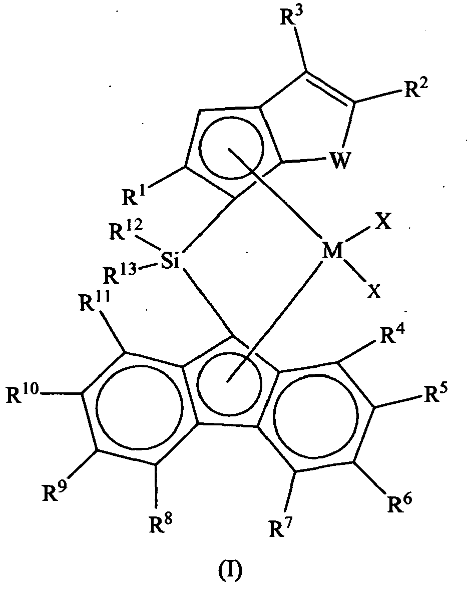 wherein
M is zirconium titanium or hafnium; preferably M is zirconium; W is a sulfur or a oxygen atom; preferably a sulfur atom
X, equal to or different from each other, is a hydrogen atom, a halogen atom, a R, OR, OR'O, OSO₂CF₃, OCOR, SR, NR₂ or PR₂ group wherein R is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical, optionally containing heteroatoms belonging to groups 13-17 of the Periodic Table of the Elements; and R' is a C₁-C₂₀-alkylidene, C₆-C₂₀-arylidene, C₇-C₂₀-alkylazylidene, or C₇-C₂₀-arylalkylidene radical; preferably X is a hydrogen atom, a halogen atom, a OR'O or R group; more preferably X is chlorine or a methyl radical;
R⁴, R⁵, R⁶, R⁷, R⁸, R⁹, R¹⁰, and R¹¹, equal to or different from each other, are hydrogen atoms, or C₁-C₄₀ hydrocarbon radicals optionally containing heteroatoms belonging to groups 13-17 of the Periodic Table of the Elements; two or more R⁴, R⁵, R⁶, R⁷, R⁸, R⁹, R¹⁰, and R¹¹ can also optionally join to form one or more C₄-C₁₀ condensed saturated or unsaturated ring; preferably R⁴, R⁵, R⁶, R⁷, R⁸, R⁹, R¹⁰, and R¹¹, equal to or different from each other, are hydrogen atoms or linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical, optionally containing one or more heteroatoms belonging to groups 13-17 of the Periodic Table of the Elements; more preferably R⁴, R⁵, R⁶, R⁷, R⁸, R⁹, R¹⁰, and R¹¹ are hydrogen atoms;
R¹² and R¹³, equal to or different from each other, are hydrogen atom or C₁-C₄₀ hydrocarbon radicals optionally containing heteroatoms belonging to groups 13-17 of the Periodic Table of the Elements; preferably R¹² and R¹³ are C₁-C₁₀ alkyl or C₆-C₂₀ aryl radicals; more preferably they are methyl radicals;
R¹ and R², equal to or different from each other, are linear or branched, C₁-C₂₀-alkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; preferably R¹ and R², equal to or different from each other, are C₁-C₁₀-alkyl radicals or C₆-C₂₀-aryl radicals; more preferably R¹ is a methyl or ethyl radical and R² is a methyl, ethyl or phenyl radical; R³ is a C₁-C₄₀ hydrocarbon radical optionally containing heteroatoms belonging to groups 13-17 of the Periodic Table of the Elements; preferably R³, is a hydrogen atom or a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical, optionally containing one or more heteroatoms belonging to groups 13-17 of the Periodic Table of the Elements; more preferably R³ is a C₆-C₂₀ aryl radical or a C₇-C₄₀-arylalkyl radical;

Preferably the compound of formula (I) has formula (II) (claimed) 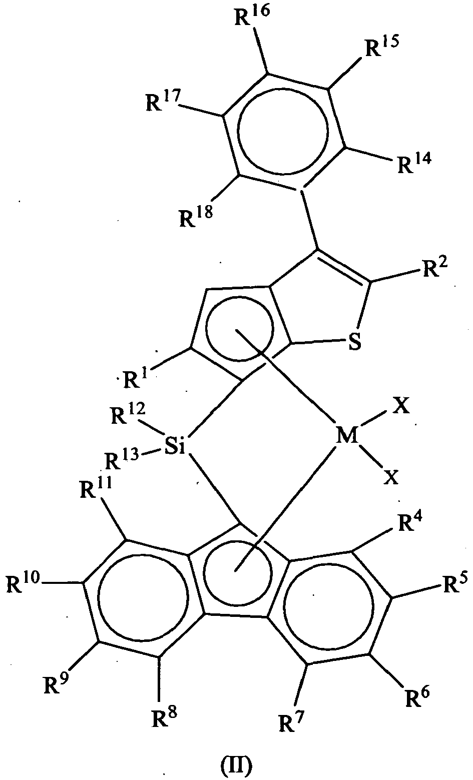 wherein
M, X, R¹, R², R⁴, R⁵, R⁶, R⁷, R⁸, R⁹, R¹⁰, R¹¹, R¹² and R¹³ have been described above; R¹⁴, R¹⁵, R¹⁶, R¹⁷ and R¹⁸, equal to or different from each other, are hydrogen atoms or C₁-C₄₀ hydrocarbon radicals optionally containing heteroatoms belonging to groups 13-17 of the Periodic Table of the Elements; preferably R¹⁴, R¹⁵, R¹⁶, R¹⁷ and R¹⁸, are hydrogen atoms or linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radicals optionally containing heteroatoms belonging to groups 13-17 of the Periodic Table of the Elements;
more preferably R¹⁴, R¹⁵, R¹⁶, R¹⁷ and R¹⁸ are hydrogen atoms, C₁-C₄₀-alkyl or C₆-C₄₀-aryl radicals;

In a preferred embodiment, R¹⁶ is a C₁-C₄₀-alkyl radical, preferably a branched C₁-C₄₀-alkyl radical such as a tertbutyl radical, more preferably R¹⁶ is a branched C₁-C₄₀-alkyl radical wherein the carbon atom in position alpha is a tertiary carbon atom and R¹⁴, R¹⁵, R¹⁷ and R¹⁸ are hydrogen atoms;
in a further preferred embodiment R¹⁴ and R¹⁷ are C₁-C₄₀-alkyl radicals, preferably they are linear C₁-C₄₀ alkyl radicals such as methyl radicals and R¹⁵, R¹⁸ and R¹⁶ are hydrogen radicals;
in a further preferred embodiment R¹⁵, R¹⁶ and R¹⁷ are linear or branched C₁-C₄₀-alkyl radicals such as methyl or tertbutyl radicals and R¹⁴ and R¹⁸ are hydrogen atoms;
in a further preferred embodiment R¹⁴ is a linear or branched C₁-C₄₀-alkyl radicals such as methyl or ethyl radicals and R¹⁵, R¹⁶, R¹⁷, and R¹⁸ are hydrogen atoms;
in a further preferred embodiment R¹⁴, R¹⁵, R¹⁶, R¹⁷ and R¹⁸ are hydrogen atoms.

A further not claimed, object of the present invention is a ligand of formula (Ia): 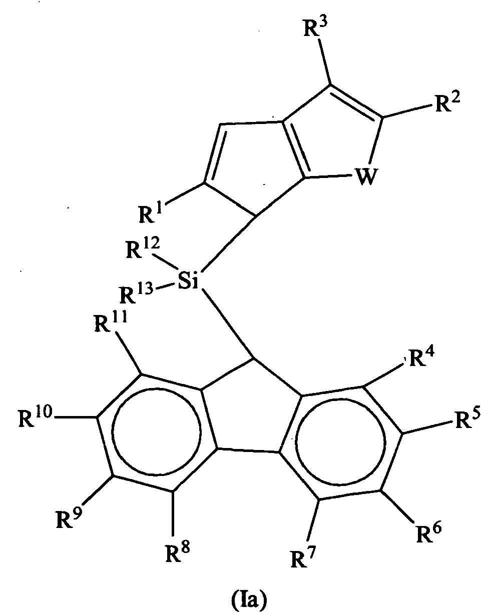 and its double bond isomers
wherein
W, R¹, R², R³, R⁴, R⁵, R⁶, R⁷, R⁸, R⁹, R¹⁰, R¹¹, R¹² and R¹³ have been described above;

Preferably the ligand of formula (Ia) has formula (IIa) (claimed) 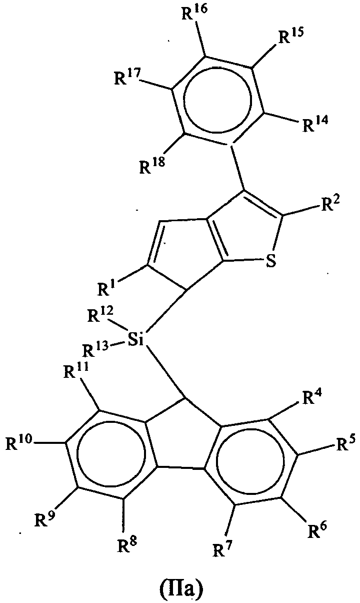 and its double bond isomers
wherein
R¹, R², R⁴, R⁵, R⁶, R⁷, R⁸, R⁹, R¹⁰, R¹¹, R¹², R¹³, R¹⁴, R¹⁵, R¹⁶, R¹⁷ and R¹⁸ have been described above.

The metallocene compounds of formula (I) can be obtained with a process comprising the steps of reacting the dianion of the ligand of formula (Ia) with a suitable transition metal source such as metal tetrahalide as for example zirconium tetrachloride. The dianion can be obtained for example by the deprotonation of the ligand of formula (Ia), for example by using an organolithium compound such as butyl or methyl lithium.

The ligand of formula (Ia) can be easily prepared starting from the cyclopentadienyl moieties of formulas (III) and (IV) 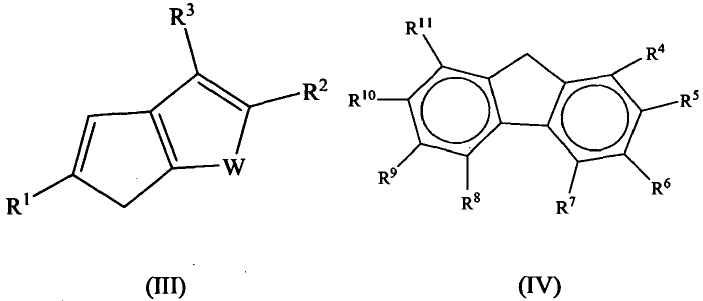 wherein W, R¹, R², R³, R⁴, R⁵, R⁶, R⁷, R⁸, R⁹, R¹⁰ and R¹¹ have been described above with a process comprising the following steps:
a) Contacting the compound of formula (III) and/or its double bond isomers with a base selected from TⱼB, TMgT¹, sodium and potassium hydride, metallic sodium and potassium; wherein T, j, B and T¹ are defined as above, and wherein the molar ratio between said base and the compound of the formula (III) is at least 1:1; excess of said base can be used;
b) contacting the anionic compound obtained in step a) with a compound of formula SiR¹²R¹³Y₂ wherein R¹² and R¹³ are defined as above and Y is chlorine, bromine and iodine, preferably Y is chlorine or bromine; to form a compound of formula (IIIa) 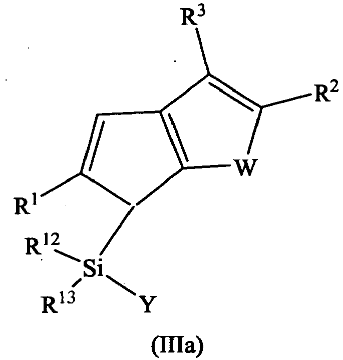
c) contacting the compound of formula (IIIa) with the anionic derivative of compound of formula (IV) obtained by contacting the compound of formula (IV) with a base selected from TⱼB, TMgT¹ , sodium and potassium hydride, metallic sodium and potassium as described in step a) for compound of formula (III).

The above process can be also carried out by using the compound of formula (IV) in steps a) and b) to form the compound of formula (IVa) 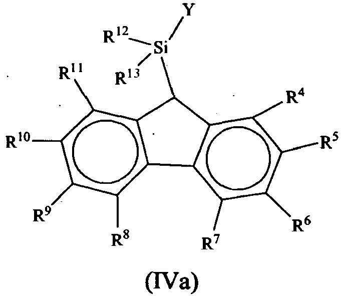 and the subsequent contact of the compound of formula (III) as in step c).

The above processes are preferably carried out in an aprotic solvent, either polar or apolar. Said aprotic solvent is preferably an aromatic or aliphatic hydrocarbon, optionally halogenated, or an ether; more preferably it is selected from benzene, toluene, pentane, hexane, heptane, cyclohexane, dichloromethane, diethylether, tetrahydrofurane and mixtures thereof The above process is carried out at a temperature ranging from -100°C to +80°C, more preferably from -20°C to +70°C.

A further object of the present invention is a catalyst system obtainable by contacting
A) a metallocene compound belonging to the formula (I);
B) an alumoxane or a compound capable of forming an alkyl metallocene cation; and optionally
C) an organo aluminum compound.

Alumoxanes used as component B) can be obtained by reacting water with an organoaluminium compound of formula HⱼAlU₃₋ⱼ or HⱼAl₂U₆₋ⱼ, where U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or or C₇-C₂₀-arylalkyl radical, optionally containing silicon or germanium atoms with the proviso that at least one U is different from halogen, and j ranges from 0 to 1, being also a non-integer number. In this reaction the molar ratio of Al/water is preferably comprised between 1:1 and 100:1. The molar ratio between aluminium and the metal of the metallocene generally is comprised between about 10:1 and about 20000:1, and more preferably between about 100:1 and about 5000:1. The alumoxanes used in the catalyst according to the invention are considered to be linear, branched or cyclic compounds containing at least one group of the type: 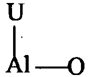 wherein the substituents U, same or different, are described above.

In particular, alumoxanes of the formula: 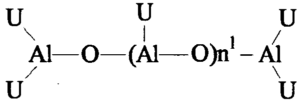 can be used in the case of linear compounds, wherein n¹ is 0 or an integer from 1 to 40 and the substituents U are defined as above, or alumoxanes of the formula: 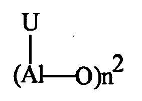 can be used in the case of cyclic compounds, wherein n² is an integer from 2 to 40 and the U substituents are defined as above. Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO). Particularly interesting cocatalysts are those described in WO 99/21899 and in WO01/21674 in which the alkyl and aryl groups have specific branched patterns. Non-limiting examples of aluminium compounds according to WO 99/21899 and WO01/21674 are: tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methyl-butyl)aluminium, tris(2-ethyl-3-methyl-pentyl)aluminium, tris(2,3-ethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethylbutyl)aluminium, tris(2-ethyl-3,3-dimethyl-pentyl)aluminium, tris(2-isopropyl-3,3-dimethylbutyl)aluminium, tris(2-trimethylsilyl-propyl)aluminium, tris(2-methyl-3-phenylbutyl)aluminium, tris(2-ethyl-3-phenyl-butyl)aluminium, tris(2,3-dimethyl-3-phenylbutyl)aluminium, tris(2-phenyl-propyl)aluminium, tris[2-(4-fluoro-phenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBAL), tris(2,4,4-trimethyl-pentyl)aluminium (TIOA), tris(2,3-dimethylbutyl)aluminium (TDMBA) and tris(2,3,3-trimethylbutyl)aluminium (TRMBA) are preferred.

Non-limiting examples of compounds able to form an alkylmetallocene cation are compounds of formula D⁺E⁻, wherein D⁺ is a Br⌀nsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be able to be removed by an olefinic monomer. Preferably, the anion E⁻ comprises of one or more boron atoms. More preferably, the anion E⁻ is an anion of the formula BAr₄⁽⁻⁾, wherein the substituents Ar which can be identical or different are aryl radicals such as pentafluorophenyl or bis(trifluoromethyl)phenyl. Tetrakis-pentafluorophenyl borate is particularly preferred examples of these compounds are described in WO 91/02012. Moreover, compounds of the formula BAr₃ can conveniently be used. Compounds of this type are described, for example, in the published International patent application WO 92/00333. Other examples of compounds able to form an alkylmetallocene cation are compounds of formula BAr₃P wherein P is a substituted or unsubstituted pyrrol radicals.. These compounds are described in WO01/62764. Other examples of cocatalyst can be found in EP 775707 and DE 19917985. Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula D⁺E⁻ are:
Tributylammoniumtetra(pentafluorophenyl)borate,
Tributylammoniumtetra(pentafluorophenyl)aluminate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonjum-tetrakispentafluomphenylborate,
Di(propyl)ammoniumtetrakis(pentafluorophenyl)borate,
Di(cyclohexyl)ammoniumtetrakis(pentafluorophenyl)borate,
Triphenylcarbeniumtetrakis(pentafluorophenyl)borate,
Triphenylcarbeniumtetrakis(pentafluorophenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.
Organic aluminum compounds used as compound C) are those of formula HⱼAlU₃₋ⱼ or HⱼAl₂U₆₋ⱼ described above.

The catalysts of the present invention can also be supported on an inert carrier. This is achieved by depositing the metallocene compound A) or the product of the reaction thereof with the component B), or the component B) and then the metallocene compound A) on an inert support. The support can be a porous solid such as talc, a sheet silicate, an inorganic oxide or a finely divided polymer powder (e.g. polyolefin). Suitable inorganic oxides may be found among the oxides of elements of groups 2, 3, 4, 5, 13, 14, 15 and 16 of the Periodic Table of the Elements. Examples of oxides preferred as supports include silicon dioxide, aluminum oxide, and also mixed oxides of the elements calcium, aluminum, silicon, magnesium or titanium and also corresponding oxide mixtures, magnesium halides, styrene/divinylbenzene copolymers, polyethylene or polypropylene. Other inorganic oxides which can be used alone or in combination with the abovementioned preferred oxidic supports arc, for example, MgO, ZrO₂, TiO₂ or B₂O₃.

A suitable class of supports which can be used is that constituted by porous organic supports functionalized with groups having active hydrogen atoms. Particularly suitable are those in which the organic support is a partially crosslinked styrene polymer. Supports of this type are described in European application EP-633 272.

Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The support materials used preferably have a specific surface area in the range from 10 to 1 000 m²/g, a pore volume in the range from 0.1 to 5 ml/g and a mean particle size of from 1 to 500 µm. Preference is given to supports having a specific surface area in the range from 50 to 500 m²/g, a pore volume in the range from 0.5 to 3.5 ml/g and a mean particle size in the range from 5 to 350 µm. Particular preference is given to supports having a specific surface area in the range from 200 to 400 m²/g, a pore volume in the range from 0.8 to 3.0 ml/g and a mean particle size of from 10 to 300 µm.

The inorganic support can be subjected to a thermal treatment, e.g. to remove adsorbed water. Such a drying treatment is generally carried out at from 80 to 300°C, preferably from 100 to 200°C, with drying at from 100 to 200°C preferably being carried out under reduced pressure and/or a blanket of inert gas (e.g. nitrogen), or the inorganic support can be calcined at from 200 to 1 000°C to produce the desired structure of the solid and/or set the desired OH concentration on the surface. The support can also be treated chemically using customary desiccants such as metal alkyls, preferably aluminum alkyls, chlorosilanes or SiCl₄, or else methylaluminoxane. Appropriate treatment methods are described, for example, in WO 00/31090.

The inorganic support material can also be chemically modified. For example, treatment of silica gel with (NH₄)₂SiF₆ leads to fluorination of the silica gel surface, or treatment of silica gels with silanes containing nitrogen-, fluorine- or sulfur-containing groups leads to correspondingly modified silica gel surfaces.

Organic support materials such as finely divided polyolefin powders (e.g. polyethylene, polypropylene or polystyrene) can also be used and are preferably likewise freed of adhering moisture, solvent residues or other impurities by means of appropriate purification and drying operations before use. It is also possible to use functionalized polymer supports, e.g. supports based on polystyrene, via whose functional groups, for example ammonium or hydroxy groups, at least one of the catalyst components can be immobilized. The solid compound obtained by supporting the catalyst system object of the present invention on a carrier in combination with the further addition of the alkylaluminium compound either as such or prereacted with water if necessary, can be usefully employed in the gas-phase or slurry polymerization.

Otherwise the catalyst system of the present invention can be prepared by contacting the metallocene of formula (I) and a suitable cocatalyst, in a solvent. The cocatalyst is preferably the reaction product of methylalumoxane and triisobutylaluminum.

The catalyst of the present invention can be preferably prepared according to PCT/EP2005/002479 both by distilling off toluene or by following the described procedure but without such a distillation.

The catalyst system comprising the metallocene compound of formula (I) can be used for polymerizing olefins, in particular alpha-olefins in high yields to obtain polymers having high molecular weight. Therefore a further object of the present invention is a process for preparing a alpha-olefin polymer comprising contacting under polymerization conditions one or more alpha-olefins of formula CH₂=CHA wherein A is hydrogen or a C₁-C₂₀ alkyl radical, in the presence of a catalyst system as described above.

Non limitative examples of alpha-olefins of formula CH₂=CHA are: ethylene, propylene, 1-butene, 1-hexene, 1-octene and 4-methyl-1-pentene, preferred alpha olefins are ethylene propylene and 1-butene.

The metallocene compound of the present invention is particularly suitable for the homo or copolymerization of 1-butene, with the obtainment of high molecular weight polymers. Therefore a further object of the present invention is a process for preparing 1-butene polymers, said process comprising polymerizing 1-butene or copolymerizing 1-butene with ethylene, propylene or an alpha-olefin of formula CH₂=CHT wherein T is a C₃-C₁₀ alkyl group, in the presence of a catalyst system described above.

The polymerization process of the present invention can be carried out in liquid phase, optionally in the presence of an inert hydrocarbon solvent, or in gas phase. Said hydrocarbon solvent can be either aromatic (such as toluene) or aliphatic (such as propane, hexane, heptane, isobutane, cyclohexane and 2,2,4-trimethylpentane). Preferably, the polymerization process of the present invention is carried out by using liquid 1 butene as polymerization medium. The polymerization temperature preferably ranges from 0°C to 250°C; preferably comprised between 20°C and 150°C and, more particularly between 50°C and 90°C. The molecular weight distribution can be varied by using mixtures of different metallocene compounds or by carrying out the polymerization in several stages which differ as to the polymerization temperature and/or the concentrations of the molecular weight regulators and/or the monomers concentration. Moreover by carrying out the polymerization process by using a combination of two different metallocene compounds of formula (I) a polymer endowed with a broad melting is produced. The polymerization yield depends on the purity of the transition metal organometallic catalyst compound (A) in the catalyst, therefore, said compound can be used as such or can be subjected to purification treatments before use. The polymerization process of the present invention can be carried out in the presence of hydrogen in order to increase the yield.

When 1-butene is copolymerized with ethylene, propylene or alpha olefins of formula CH₂=CHT wherein T is a C₃-C₁₀ alkyl group, a copolymer having a content of comonomer derived units of up to 50% by mol can be obtained, preferably up to 20% by mol, more preferably from 0.2% by mol to 15% by mol. Examples of alpha-olefins of formula CH₂=CHT are 1-pentene, 4-methyl-1-pentene, 1-hexene, 1-octene, 4,6-dimethyl-1-heptene, 1-decene, 1-dodecene. Preferred comonomer to be used in the process according to the present invention are ethylene, propylene and 1-hexene.

With the process of the present invention it is possible to obtain 1-butene polymers having high molecular weight, measured in terms of their intrinsic viscosity (I.V. or Mv) and in high yields.

The following examples are given to illustrate and not to limit the invention.

### Examples

### Polybutene characterization

**Molecular weights.** The viscosity average molecular weights were determined from the intrinsic viscosity values measured in tetrahydronaphthalene (THN) at 135°C, from the relationship: <*M*ᵥ>=(I.V./0.000178)exp(1/0.725).

**Thermal data.** The melting points of the polymers (*T*ₘ) were measured by Differential Scanning Calorimetry (D.S.C.) on a Perkin Elmer DSC-1 calorimeter equipped with Pyris 1 software, previously calibrated against indium and zinc melting points. The weight of the samples in every DSC crucible was kept at 6.0 ± 0.5 mg.

In order to obtain the melting point of form II, the weighted sample was sealed into aluminum pans and heated to 180°C at 10°C/minute. The sample was kept at 180°C for 5 minutes to allow a complete melting of all the crystallites, then cooled to 20°C at 10°C/minute. After standing 2 minutes at 20°C, the sample was heated for the second time to 180°C at 10°C/min. In this second heating run, the peak temperature was taken as the melting temperature of form II (*T*ₘ II) and the area of the peak as its melting enthalpy (ΔH_{f}).

### Synthesis of Me₂Si(9-Fluorenyl)(2,5-dimethyl-3-(o-tolyl)cyclopenta[b]thiapentalen-6-yl)zirconium dichloride (A-1)

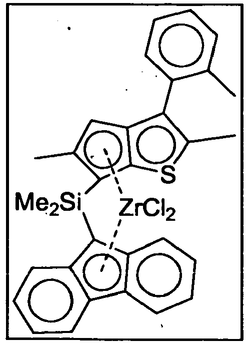

3.4 g (14 mmol) of 2,5-dimethyl-3-(o-tolyl)cyclopenta[b]thiapentalene was dissolved in 50 ml diethylether and cooled to 0°C, then treated with 14.5 mmol butyllithium (5.8 ml). The reaction mixture was stirred at room temperature for 3 h, then 115 µl N-methylimidazole was added. The reaction mixture was stirred an additional 15 minutes then an additional 10 ml THF was added to dissolve the formed Li salts. The solution was then cannulated slowly into a solution containing 15 mmol dimethyl(9-fluorenyl)chlorosilane in 30 ml THF at -78°C. After addition was complete, the reaction mixture was warmed to room temperature and stirring was continued overnight. The reaction mixture was quenched with 10 ml saturated ammonium chloride solution, the organics were collected with diethylether and dried in vacuo. The product was chromatographed over silica using dichloromethane/hexane. YIELD: 5.3 g (82%)

5.3 g of the ligand prepared above was dissolved in 60 ml diethylether, cooled to -30°C, then treated with 10 ml nBuLi (2.5M in hexanes). The reaction mixture was stirred at room temperature overnight, then solvents were removed in vacuo. 11.5 mmol (2.68 g) ZrCl₄ was added and the solids were slurried in 60 ml pentane. At 0°C, 1 ml diethylether was added and the reaction mixture was stirred overnight at room temperature. Solids were collected by filtration, washed with fresh pentane and dried (7.4 g recovered in this fashion).

The material was further purified by slurring 2.4 g in dichloromethane, filtering through Celite and evaporating the solvent leaving a dark red-brown solid. The solid was washed with diethylether, dichloromethane, pentane, then dried in vacuo. (0.9 g orange solids recovered). Further purification was made by redissolving the solids in boiling toluene. 250 mg of microcrystals were recovered, washed with pentane, then dried.

### Example 11-butene polymerizations

The cocatalyst methylalumoxane (MAO) was a commercial product from Crompton, 10 %wt/vol (1.7 M in Al) in toluene, and was used as received. The catalyst mixture was prepared by dissolving the amount of the metallocene reported in table 1 with the proper amount of the MAO solution, (Al/Zr ratio = 500) obtaining a solution which was stirred for 10 min at room temperature before being injected into the autoclave.

6 mmol of Al*ⁱ*Bu₃ (as a 1M solution in hexane) and 1350 g of 1-butene were charged at room temperature in a 4-L jacketed stainless-steel autoclave, equipped with magnetically driven stirrer and a 35-mL stainless-steel vial, connected to a thermostat for temperature control, previously purified by washing with an Al*ⁱ*Bu₃ solution in hexanes and dried at 50°C in a stream of nitrogen. The autoclave was then thermostated at the polymerization temperature, and then the toluene solution containing the catalyst/cocatalyst mixture was injected in the autoclave by means of nitrogen pressure through the stainless-steel vial, and the polymerization carried out at constant temperature for the time indicated in Table 1. Then stirring is interrupted; the pressure into the autoclave is raised to 20 bar-g with nitrogen. The bottom discharge valve is opened and the 1-butene/poly-1-butene mixture is discharged into a heated steel tank containing water at 70°C. The tank heating is switched off and a flow of nitrogen at 0.5 bar-g is fed. After cooling at room temperature, the steel tank is opened and the wet polymer collected. The wet polymer is dried in an oven under reduced pressure at 70°C. Polymerization data are reported in table 1.

**Table 1**

| **Exam ple** | **monomer** | **Zirconocene** | **mg** | **Al_{(MAO)}/ Zr** | **Tₚ °C** | **t min** | **kg_{Polymer}/ (g_{cat}×h)** | **IV dl/g THN** | ***T*ₘ °C** |
|---|---|---|---|---|---|---|---|---|---|
| **1** | **1-butene** | **A-1** | 3 | 500 | 70 | 60 | 15 | 1.9 | 102 |

## Claims

1. A metallocene compound of formula (II 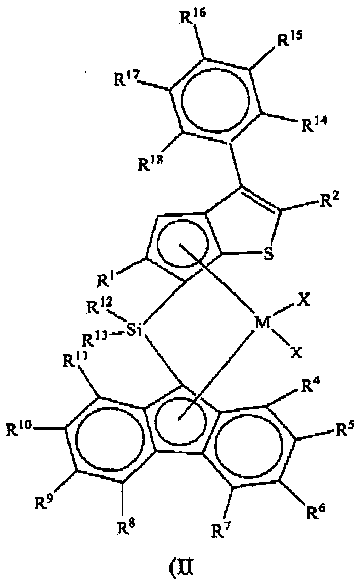 wherein
M is zirconium titanium or hafnium;
X, equal to or different from each other, is a hydrogen atom, a halogen atom, a R, OR, OR'O, OSO₂CF₃, OCOR, SR, NR₂ or PR₂ group wherein R is a linear or branched, saturated or unsaturated C₁-C₂-alkyl, C₃-C₂₀-cycloalkyl, C₆-C₂₀-aryl, C₇-C₂₀-alkylaryl or C₇-C₂₀-arylakyl radical, optionally containing heteroatoms belonging to groups 13-17 of the Periodic Table of the Elements; and R' is a C₁-C₂₀-alkylidene, C₆-C₂₀-arylidene, C7-C₂₀-alkylarylidene, or C₇-C₂₀-arylalkylidene radical;
R⁴, R⁵, R⁶, R⁷, R⁸, R⁹, R¹⁰, and R¹¹, equal to or different from each other, are hydrogen atoms, or C₁-C₄₀ hydrocarbon radicals optionally containing heteroatoms belonging to groups 13-17 of the Periodic Table of the Elements; two or more R⁴, R⁵, R⁶, R⁷, R⁸, R⁹, R¹⁰, and R¹¹ can also optionally join to form one or more C₄-C₁₀ condensed saturated or unsaturated ring;
R¹² and R¹³, equal to or different from each other, are hydrogen atom or C₁-C₄₀ hydrocarbon radicals optionally containing heteroatoms belonging to groups 13-17 of the Periodic Table of the Elements;
R¹ and R², equal to or different from each other, are linear or branched, C₁-C₂₀-alkyl, C₆-C₂₀-aryl, C₇-C₂₀-alkylaryl or C₇-C₂₀-arylalkyl radicals , optionally containing heteroatoms belonging to groups 13-17 of the Periodic Table of the Elements;
R¹⁴, R¹⁵, R¹⁶, R¹⁷ and R¹⁸, equal to or different from each other, are hydrogen atoms or C₁-C₄₀ hydrocarbon radicals optionally containing heteroatoms belonging to groups 13-17 of the Periodic Table of the Elements.

2. The metallocene compound according to claim 1 wherein X is a hydrogen atom, a halogen atom, a OR'O or R group; R⁴, R⁵, R⁶, R⁷, R⁸, R⁹, R¹⁰, and R¹¹ are hydrogen atoms; R¹² and R¹³ are C₁-C₁₀ alkyl or C₆-C₂₀ aryl radicals; and R¹ and R², equal to or different from each other, are C₁-C₁₀-alkyl radicals; R³ is a C₆-C₂₀ aryl radical or a C₇-C₄₀-arylalkyl radical.

3. The metallocene compound according to claim 1 wherein R¹⁶ is a C₁-C₄₀-alkyl radical, and R¹⁴, R¹⁵, R¹⁷ and R¹⁸ are hydrogen atoms.

4. The metallocene compound according to claim 1 wherein R¹⁴ and R¹⁷ are C₁ -C₄₀-alkyl radicals, and R¹⁵, R¹⁸ and R¹⁶ are hydrogen atoms.

5. The metallocene compound according to claim 1 wherein R¹⁵, R¹⁶ and R¹⁷ are linear or branched C₁-C₄₀-alkyl radicals and R¹⁴ and R¹⁸ are hydrogen atoms.

6. The metallocene compound according to claim 1 wherein R¹⁴ is a linear or branched C₁-C₄₀-alkyl radical and R¹⁵, R¹⁶, R¹⁷, and R¹⁸ are hydrogen atoms.

7. The metallocene compound according to claim 1 wherein R¹⁴, R¹⁵, R¹⁶, R¹⁷ and R¹⁸ are hydrogen atoms.

8. The ligand of formula (IIa) 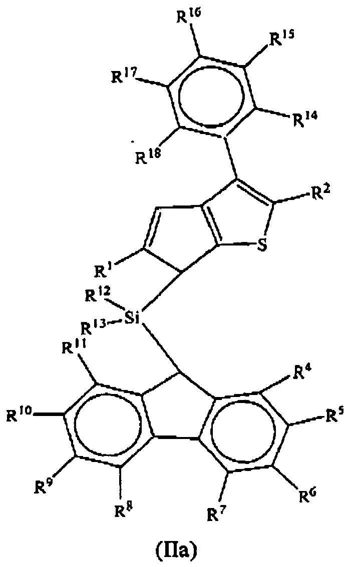 and its double bond isomers, wherein R¹, R², R⁴, R⁵, R⁶ R⁷ R⁸, R⁹, R¹⁰, R¹¹, R¹², R¹³, R¹⁴, R¹⁵, R¹⁶, R¹⁷ and R¹⁸ have been described in claim 1

9. A catalyst system obtainable by contacting:
A) a metallocene compound belonging to the formula (II); as described in claims 1-7;
B) an alumoxane or a compound capable of forming an alkyl metallocene cation; and optionally
C) an organo aluminum compound.

10. A process for preparing an alpha-olefin polymer comprising contacting under polymerization conditions one or more alpha-olefins of formula CH₂=CHA wherein A is hydrogen or a C₁-C₂₀ alkyl radical, in the presence of a catalyst system as described in claim 9.

11. The process according to claim 10 for preparing 1-butene polymers comprising polymerizing 1-butene or copolymerizing 1-butene with ethylene, propylene or an alpha-olefin of formula CH₂=CHT wherein T is a C₃-C₁₀ alkyl group, in the presence of a catalyst system as described in claim 9.

## Patentansprüche

1. Metallocenverbindung der Formel (II) 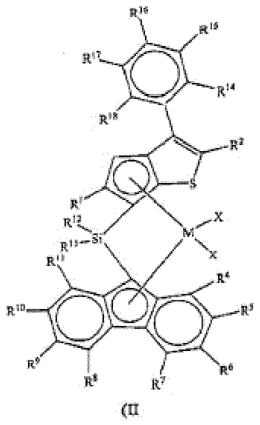 wobei
M Zirconium, Titan oder Hafnium ist;
X, gleich oder verschieden voneinander, ein Wasserstoffatom, ein Halogenatom, eine R-, OR-, OR'O-, OSO₂CF₃-, OCOR-, SR-, NR₂- oder PR₂-Gruppe ist, wobei R ein linearer oder verzweigter, gesättigter oder ungesättigter C₁- bis C₂₀-Alkyl- C₃- bis C₂₀-Cycloalkyl-, C₆- bis C₂₀-Aryl-, C₇- bis C₂₀-Alkylaryl- oder C₇- bis C₂₀-Arylalkylrest ist, der gegebenenfalls Heteroatome enthält, die zu den Gruppen 13 bis 17 des Periodensystems der Elemente gehören; und R' ein C₁-bis C₂₀-Alkyliden-, C₆- bis C₂₀-Aryliden-, C₇- bis C₂₀-Alkylaryliden- oder C₇- bis C₂₀-Arylalkylidenrest ist;
R⁴, R⁵, R⁶, R⁷, R⁸, R⁹, R¹⁰ und R¹¹, gleich oder verschieden voneinander, Wasserstoffatome oder C₁- bis C₄₀-Kohlenwasserstoffreste sind, die gegebenenfalls Heteroatome enthalten, die zu den Gruppen 13 bis 17 des Periodensystems der Elemente gehören; zwei oder mehr R⁴, R⁵, R⁶, R⁷, R⁸, R⁹, R¹⁰ und R¹¹ zur Bildung von einem oder mehr gesättigten oder ungesättigten kondensierten C₄- bis C₁₀-Ring(en) auch gegebenenfalls miteinander verbunden werden können;
R¹² und R¹³, gleich oder verschieden voneinander, Wasserstoffatome oder C₁- bis C₄₀-Kohlenwasserstoffreste sind, die gegebenenfalls Heteroatome enthalten, die zu den Gruppen 13 bis 17 des Periodensystems der Elemente gehören;
R¹ und R², gleich oder verschieden voneinander, linear oder verzweigt, C₁- bis C₂₀-Alkyl-, C₆- bis C₂₀-Aryl-, C₇- bis C₂₀-Alkylaryl- oder C₇ bis C₂₀-Arylalkylreste, die gegebenenfalls Heteroatome enthalten, die zu den Gruppen 13 bis 17 des Periodensystems der Elemente gehören;
R¹⁴, R¹⁵, R¹⁶, R¹⁷ und R¹⁸, gleich oder verschieden voneinander, Wasserstoffatome oder C₁- bis C₄₀-Kohlenwasserstoffreste sind, die gegebenenfalls Heteroatome enthalten, die zu den Gruppen 13 bis 17 des Periodensystems der Elemente gehören.

2. Metallocenverbindung nach Anspruch 1, wobei X ein Wasserstoffatom, ein Halogenatom, eine OR'O- oder R-Gruppe ist; R⁴, R⁵, R⁶, R⁷, R⁸, R⁹, R¹⁰ und R¹¹ Wasserstoffatome sind; R¹² und R¹³ C₁- bis C₁₀-Alkyl- oder C₆- bis C₂₀-ArylReste sind; und R¹ und R², gleich oder verschieden voneinander, C₁ bis C₁₀-Alkylreste sind; R³ ein C₆- bis C₂₀-Arylrest oder ein C₇- bis C₄₀-Arylalkylrest ist.

3. Metallocenverbindung nach Anspruch 1, wobei R¹⁶ ein C₁- bis C₄₀-Alkylrest ist, und R¹⁴ , R¹⁵, R¹⁷ und R¹⁸ Wasserstoffatome sind.

4. Metallocenverbindung nach Anspruch 1, wobei R¹⁴ und R¹⁷ C₁- bis C₄₀-Alkylreste sind, und R¹⁵, R¹⁸ und R¹⁶ Wasserstoffatome sind.

5. Metallocenverbindung nach Anspruch 1, wobei R¹⁵, R¹⁶ und R¹⁷ lineare oder verzweigte C₁- bis C₄₀-Alkylreste sind und R¹⁴ und R¹⁸ Wasserstoffatome sind.

6. Metallocenverbindung nach Anspruch 1, wobei R¹⁴ ein linearer oder verzweigter C₁- bis C₄₀-Alkylrest ist und R¹⁵, R¹⁶, R¹⁷ und R¹⁸ Wasserstoffatome sind.

7. Metallocenverbindung nach Anspruch 1, wobei R¹⁴, R¹⁵, R¹⁶, R¹⁷ und R¹⁸ Wasserstoffatome sind.

8. Ligand der Formel (IIa) 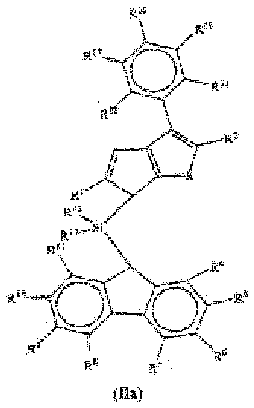 und seine Doppelbindungsisomere, wobei R¹R², R⁴, R⁵, R⁶, R⁷, R⁸, R⁹, R¹⁰, R¹¹, R¹² , R¹³, R¹⁴, R¹⁵ R¹⁶, R¹⁷ und R¹⁸ in Anspruch 1 beschrieben worden sind.

9. Katalysatorsystem, erhältlich durch das Inkontaktbringen von:
A) einer Metallocenverbindung, die zu der Formel (II) gehört; wie in den Ansprüchen 1 bis 7 beschrieben;
B) einem Alumoxan oder einer Verbindung, die zur Bildung eines Alkylmetallocenkations in der Lage ist; und gegebenenfalls
C) einer Organoaluminiumverbindung.

10. Verfahren zur Herstellung eines α-Olefinpolymers, umfassend das Inkontaktbringen unter Polymerisationsbedingungen von einem oder mehr α-Olefin(en) der Formel CH₂=CHA, wobei A Wasserstoff oder ein C₁- bis C₂₀-Alkylrest in der Gegenwart eines wie in Anspruch 9 beschriebenen Katalysatorsystems ist.

11. Verfahren nach Anspruch 10 zur Herstellung von 1-Butenpolymeren, umfassend die Polymerisierung von 1-Buten oder Copolymerisierung von 1-Buten mit Ethylen, Propylen oder einem α-Olefin der Formel CH₂=CHT, wobei T eine C₃-bis C₁₀-Alkylgruppe in der Gegenwart eines Katalysatorsystems wie in Anspruch 9 beschrieben ist.

## Revendications

1. Composé de type métallocène de formule (II) 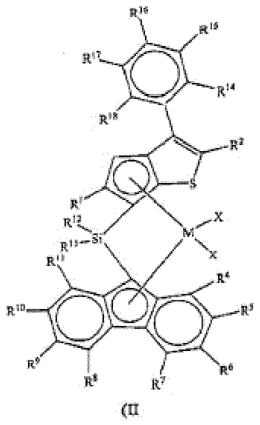 où
M représente zirconium, titane ou hafnium ;
X, identique ou différent l'un de l'autre, représente un atome d'hydrogène, un atome d'halogène, un groupe R, OR, OR'O, OSO₂CF₃, OCOR, SR, NR₂ ou PR₂, R représentant un radical C₁-C₂₀-alkyle, linéaire ou ramifié, saturé ou insaturé, C₃-C₂₀-cycloalkyle, C₆-C₂₀-aryle, C₇-C₂₀-alkylaryle ou C₇-C₂₀-arylalkyle, contenant éventuellement des hétéroatomes appartenant aux groupes 13-17 du tableau périodique des éléments ; et R' représente un radical C₁-C₂₀-alkylidène, C₆-C₂₀-arylidène, C₇-C₂₀-alkylarylidène ou C₇-C₂₀-arylalkylidène ;
R⁴, R⁵, R⁶, R⁷, R⁸, R⁹, R¹⁰ et R¹¹, identiques ou différents les uns des autres, représentent des atomes d'hydrogène ou des radicaux hydrocarbonés en C₁-C₄₀ contenant éventuellement des hétéroatomes appartenant aux groupes 13-17 du tableau périodique des éléments ; deux ou plus de deux parmi R⁴, R⁵, R⁶, R⁷, R⁸, R⁹, R¹⁰ et R¹¹ peuvent également éventuellement se lier pour former un ou plusieurs cycles en C₄-C₁₀ saturés ou insaturés, fusionnés ;
R¹² et R¹³, identiques ou différents l'un de l'autre, représentent un atome d'hydrogène ou des radicaux hydrocarbonés en C₁-C₄₀ contenant éventuellement des hétéroatomes appartenant aux groupes 13-17 du tableau périodique des éléments ;
R¹ et R², identiques ou différents l'un de l'autre, représentent des radicaux C₁-C₂₀-alkyle, linéaires ou ramifiés, C₆-C₂₀-aryle, C₇-C₂₀-alkylaryle ou C₇-C₂₀-arylalkyle contenant éventuellement des hétéroatomes appartenant aux groupes 13-17 du tableau périodique des éléments ;
R¹⁴, R¹⁵, R¹⁶, R¹⁷ et R¹⁸, identiques ou différents les uns des autres, représentent des atomes d'hydrogène ou des radicaux hydrocarbonés en C₁-C₄₀ contenant éventuellement des hétéroatomes appartenant aux groupes 13-17 du tableau périodique des éléments.

2. Composé de type métallocène selon la revendication 1, X représentant un atome d'hydrogène, un atome d'halogène, un groupe OR'O ou R ; R⁴, R⁵, R⁶, R⁷, R⁸, R⁹, R¹⁰ et R¹¹ représentant des atomes d'hydrogène ; R¹² et R¹³ représentant des radicaux C₁-C₁₀ alkyle ou C₆-C₂₀ aryle ; et R¹ et R², identiques ou différents l'un de l'autre, représentant des radicaux C₁-C₁₀-alkyle ; R³ représente un radical C₆-C₂₀ aryle ou un radical C₇-C₄₀-arylalkyle.

3. Composé de type métallocène selon la revendication 1, R¹⁶ représentant un radical C₁-C₄₀-alkyle et R¹⁴, R¹⁵, R¹⁷ et R¹⁸ représentant des atomes d'hydrogène.

4. Composé de type métallocène selon la revendication 1, R¹⁴ et R¹⁷ représentant des radicaux C₁-C₄₀-alkyle et R¹⁵, R¹⁸ et R¹⁶ représentant des atomes d'hydrogène.

5. Composé de type métallocène selon la revendication 1, R¹⁵, R¹⁶ et R¹⁷ représentant des radicaux C₁-C₄₀-alkyle linéaires ou ramifiés et R¹⁴ et R¹⁸ représentant des atomes d'hydrogène.

6. Composé de type métallocène selon la revendication 1, R¹⁴ représentant un radical C₁-C₄₀-alkyle linéaire ou ramifié et R¹⁵, R¹⁶, R¹⁷ et R¹⁸ représentant des atomes d'hydrogène.

7. Composé de type métallocène selon la revendication 1, R¹⁴, R¹⁵, R¹⁶, R¹⁷ et R¹⁸ représentant des atomes d'hydrogène.

8. Ligand de formule (IIa) 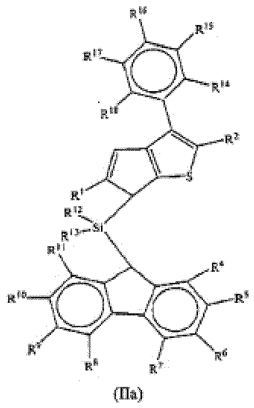 et ses isomères de double liaison, R¹, R², R⁴, R⁵, R⁶, R⁷, R⁸, R⁹, R¹⁰, R¹¹, R¹², R¹³, R¹⁴, R¹⁵, R¹⁶ R¹⁷ et R¹⁸ ayant été décrits dans la revendication 1

9. Système catalytique pouvant être obtenu en mettant en contact :
A) un composé de type métallocène appartenant à la formule (II) ; tel que décrit dans les revendications 1-7 ;
B) un aluminoxane ou un composé capable de former un cation de type alkylmétallocène ; et éventuellement
C) un composé organique de l'aluminium.

10. Procédé pour la préparation d'un polymère d'alpha-oléfine comprenant la mise en contact, dans des conditions de polymérisation, d'une ou de plusieurs alpha-oléfines de formule CH₂=CHA, A représentant hydrogène ou un radical C₁-C₂₀-alkyle, en présence d'un système catalytique tel que décrit dans la revendication 9.

11. Procédé selon la revendication 10 pour la préparation de polymères du 1-butène comprenant la polymérisation de 1-butène ou la copolymérisation de 1-butène et d'éthylène, de propylène ou d'une alpha-oléfine de formule CH₂=CHT, T représentant un groupe C₃-C₁₀-alkyle, en présence d'un système catalytique tel que décrit dans la revendication 9.
